# EUROPEAN PATENT SPECIFICATION

(11) **EP 1 441 898 B1**
(45) Date of publication and mention of the grant of the patent: **20.08.2008**
(21) Application number: 01983191.6
(22) Date of filing: 11.10.2001
(51) Int. Cl.: B29D 11/00, G02C 7/04

(54) **INSERT AND METHOD FOR CAST MOLDING CONTACT LENSES WITH A ROUNDED EDGE FORM**
EINSATZ UND VERFAHREN ZUM GIESSFORMEN VON KONTAKTLINSEN MIT EINER ABGERUNDETEN RANDFORM
INSERT ET PROCEDE DE MOULAGE PAR COULEE DE LENTILLES DE CONTACT PRESENTANT UNE FORME A BORD ARRONDI

(43) Date of publication of application: 04.08.2004
(73) Proprietor: Coopervision International Holding Company, LP., St. Michael (BB)
(72) Inventor: DEAN, Gregg, A., Sthenys, Hampshire S050 7PD (GB)
(74) Representative: Critten, Matthew Peter
(86) International application number: PCT/US2001/042682
(87) International publication number: WO 2003/031162

(56) References cited:
- EP-A- 0 383 425
- WO-A-01/42001
- US-A- 4 209 289
- US-A- 5 252 056
- US-A- 5 951 934

## Description

### Background of the Invention

The present invention generally relates to the manufacture of contact lenses and more specifically relates to methods for cast molding contact lens with a molded edge that requires no dedicated post-processing steps.

Contact lenses have historically been made by machining a lens material, in button (or block) form on front and back surfaces thereof to produce an unfinished lens product having the required fit, or "base curve", and visual correction, to compensate for one or more refractive abnormalities of the eye. Such refractive abnormalities may include myopia (nearsightedness), hypermetropia (farsightedness), astigmatism, presbyopia and the like. Using conventional machining technology, the optic faces of the unfinished lens require polishing in order to remove rings, known as "turning rings", on the unfinished lens that have been created by the machining process. Typically the edge of the lens is also polished to produce smooth edge geometry, or profile, in order to maximize wearer comfort and prevent injury to the eye. The edge polishing step is particularly important in the manufacture of "hard" lenses, in which the lens material is relatively rigid and inflexible and even small defects on the edge can cause irritation in the wearers' eye.

The machining process described above, being very labor intensive, has been widely replaced by cast molding of the lens. In conventional cast molding techniques, front and back surface mold halves are made for the required lens prescription. Each mold section is produced by injection molding techniques. A mold insert tool, for example made of metal, ceramic or the like, is provided and secured or fixed in an injection molding machine. A mold section, or mold half, is then produced having the contour of the insert. Thus, the mold section may include a negative impression of, or a contour which corresponds to, the desired lens front or back surface.

The two mold halves are assembled and lens material, for example a curable, mixture of polymerizable monomers, is introduced between the assembled mold halves. After the cast molding steps, subsequent processing steps are employed, which may include for example, curing, demolding, hydration (in the case of hydrogel lenses). In addition, edge polishing operations are often performed to smooth the edge profile of the lens.

A method of cast molding contact lenses, particularly toric contact lenses, is described in Appollonio, et al, U.S. Patent No. 5,611,970

Methods for fully cast molding contact lenses have been developed. Fully cast molded lenses are lenses in which all surfaces, front, back and edge of the lens are molded as part of a mold pair and no post processing polishing or machining operations are performed to yield the final lens product.

Unfortunately, although fully molded lenses provide an inexpensive and flexible alternative to machined and polished cast molded lenses, fully molded lenses are sometimes uncomfortable for the wearer and may even harm the eye, particularly after long term use.

It has been shown that the form and size of the edge of a contact lens have significant effects on wearer comfort and conjunctival heath. It is conventional that a fully molded lens will have a lens edge form which is "chiseled", or "pointed" in some way, and is not representative of a polished edge or an edge which had been historically manufactured to improve wearer comfort.

Wearers of conventional fully molded lenses have been known to suffer from eye irritation and reduction in "end of day comfort" of the eye. Moreover, long term wearers have been observed, with the use of a fluorescein dye, to have 'scuff' marks formed on the sclera, the scuff marks being caused by interaction between the lens and eye. To achieve a more desirable edge geometry and provide a more comfortable lens, some lens manufacturers will apply additional, separate, post processing steps such as edge polishing, in otherwise fully molded lenses. Polishing the cast molded lens will generally remove the chiseled or pointed edge profile that is conventionally produced by cast molding. Understandably, however, the additional manufacturing step will tend to increase the cost of the final lens product.

WO 01/42001 describes molds said to permit formation of a contact lens having a seamless edge by use of an interlocking means. The interlocking means are said to prevent all, or substantially all, side-to side-movement of the front mold half in relation to the back mold half.

EP 383425 describes a plastics material mould for casting a contact lens from curable material. The mold comprises disposable male and female mould members defining a mould cavity and each having a curved surface for moulding a respective optical surface of the contact lens, the male mould member having a shoulder which is a slidable fit with a generally cylindrical, e.g. frusto-conical, surface on the female mould member to permit relative mould member movement during curing without substantially affecting the optical quality of the moulded optical surfaces. The sliding fit shoulder and female surface are relatively simple to mould with accuracy and thus permit the edge of the eventual cast lens to be formed relatively reliably and accurately.

US 4,209,289 describes a two-piece contact lens mold having a pair of blunt, continuous mating surfaces extending around the periphery of the mold cavity. Parameters for mold materials and important dimensions are also disclosed. The mold is said to be able to produce finished contact lenses which do not require further machining.

US 5,252,056 describes a contact lens casting mould that includes two casting mould halves according to the preamble of the independent claims. A concave shaping surface is constructed on a female part and a convex shaping surface on a male part. When joined together, the two casting mould halves adhere by frictional connection.

US 5,951,934 describes a method for forming plastic molds for casting articles having an optical surface, such as contact lenses. The method employs a plastic tool having an optically smooth surface.

It would be highly advantageous to provide a method by which a lens could be cast molded, the resulting lens having a desirable, substantially smooth or rounded edge geometry, without the need for post processing polishing steps.

### Summary of the Invention

Accordingly, a method is provided for fully cast molding contact lenses having rounded edge surfaces.

A first aspect of the invention provides a tool having the features set out in claim 1. A second aspect of the invention provides a method for producing a contact lens product, the method having the features set out in claim 4.

Preferred features of the invention are set out in the dependent claims.

Advantageously, by implementation of the present invention, lenses can be created with an edge form providing enhanced comfort and/or safety without the need for costly and time consuming post formation processing steps.

Generally, methods for producing contact lenses, in accordance with the present invention comprise providing a back surface tool having a surface generally corresponding to a desired contact lens surface and a convex curve along an outer or peripheral radius thereof. The tool is used to form a mold section which generally defines a negative impression of a surface of the final lens product. The tool is positioned in a molding apparatus, such as a molding apparatus of conventional claims. design. A moldable composition, such as a polymeric material or a precursor composition of a polymeric material, is introduced into the molding apparatus and subjected to conditions effective to form a mold section having a negative impression of the surface of the tool. The mold section formed by the tool is a back surface mold section. In other words, the surface of the tool generally corresponds to a face, preferably the posterior face, of the contact lens to be formed. Thus, the tool may be a back surface tool generally defining the base curve of the contact lens product. As will be described in more detail hereinafter, the convex curve of the tool, when used to form a back surface mold section, provides a contact lens having the desired rounded edge form without the need for post formation processing steps.

For example, to form the rounded edge contact lens, the back surface tool having the convex curve along the outer radius thereof is positioned in a molding apparatus, for example, a conventional, injection molding apparatus.

A first mold section having a negative impression of the surface of the tool is formed. This first mold section is assembled with a second mold section. The second mold section may be made in a conventional manner and preferably generally defines a negative impression of a front, or anterior, surface of the contact lens to be produced. The assembled first and second mold sections form a lens-shaped cavity, and the method includes forming a contact lens member in the lens shaped cavity of the assembled mold sections. Upon demolding or removal from the mold sections, a fully molded, contact lens member having a rounded edge form or surface is obtained.

The demolded contact lens member may be the final contact lens. However, the demolded contact lens member may be hydrated or further hydrated to form the final contact lens with a rounded edge surface. One important advantage of the present invention is that the present contact lenses preferably do not require post-formation (after being molded) processing to alter the rounded configuration of the outer peripheral edge surface of the contact lens member or contact lens. Post-formation processing such as demolding, hydration, sterilization, packaging and the like of the contact lens or contact lens member does not alter this rounded edge surface configuration.

The portion of the back surface tool that forms the lens periphery is convex in form, preferably having a radius of at least about 0.05 mm or larger. Correspondingly, the first mold section formed by the tooling insert has a concave outer edge surface. It will be appreciated by those skilled in the art that both the tooling insert and the mold section formed thereby, in accordance with the present invention, are significantly different in form from conventional back surface tooling inserts and conventionally produced back surface mold sections.

Preferably, in accordance with the present invention, a junction angle formed between the assembled first and second mold sections, on the lens side of the lens-shaped cavity, is at least about 100 degrees, more preferably in the range of about 100 degrees to about 170 degrees.

The present invention further provides a tool, preferably a back surface tool, useful for cast molding a contact lens, for example, a contact lens having a rounded peripheral edge surface in making a mold section. In accordance with this embodiment of the invention, the tool generally comprises an insert adapted to be placed in a molding apparatus in forming a first mold section, specifically a back surface mold section, having a negative impression of a surface of the tool. To form the rounded edge surface of the final lens product, the surface of the tool includes a first surface portion in the general shape of a posterior lens face of a contact lens, and a second surface portion defining a convex curved outer peripheral edge surface of the insert.

The second surface portion may be defined by a continuous curve with a radius of curvature of about 0.05 mm.

Alternatively, the second surface portion may be defined by a series of small flats, or a combination of small flats and curves, which approximate a convexly curved surface.

It should be appreciated that each and every feature described herein, and each and every combination of two or more of such features, is included within the scope of the present invention provided that the features included in such a combination are not mutually inconsistent.

### Brief Description of the Drawings

The advantages of the present invention will be more readily understood with reference to the following description when considered in conjunction with the appended drawings of which:
Figs 1A and 1B are cross sectional views of conventional moldings for forming conventional contact lenses;
Figs 2A-2D are cross sectional views of examples of fully cast molded contact lenses manufactured using conventional molding techniques;
Fig. 3 is a cross sectional view of a fully cast molded contact lens manufactured using a method of the present invention, the contact lens having a substantially smooth, rounded edge profile;
Figs. 4A and 4B are sectional and front views of a conventional tooling insert used in conventional contact lens manufacturing techniques to form a mold section used for cast molding a contact lens;
Fig. 5 is a cross sectional view of a fully cast molded contact lens manufactured using another conventional molding technique;
Fig. 6 is a front view of a tooling insert used in a method of the present invention to form a mold section used for cast molding a contact lens with a substantially smooth, rounded edge;
Fig. 7. is a cross sectional view of the insert of the present invention, taken along line 7-7 of Fig. 6; and
Fig. 8 is a cross sectional view of molding apparatus for forming a rounded edge contact lens in accordance with a method of the present invention.

### Description of The Present Invention

New methods for cast molding contact lenses have been discovered. The present invention provides the ease of cast molding with the ability to produce a substantially smooth, rounded edge forms or surfaces without the need for costly post-processing steps.

Conventional cast molding techniques for manufacturing fully cast molded lenses produce a lens with a sharp, pointed edge profile. As mentioned hereinabove, the sharp edge is sometimes made to be smoothed or rounded by means of a polishing step that is separate from the cast molding process.

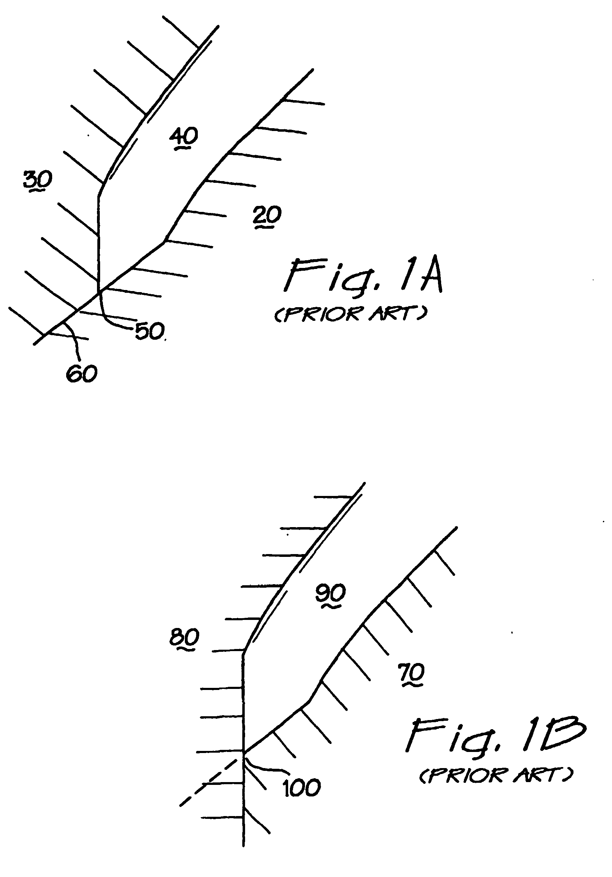

Turning now to Fig. 1A, two conventional mold halves 20, 30 which are sometimes hereinafter referred to as "casting cups", are shown in cross-section, as assembled together during conventional cast molding techniques. Lens material, for example a curable, mixture of polymerizable monomers, is introduced into a lens-shaped cavity 40 defined between the casting cups 20, 30 to form the fully cast molded lens product.

Any suitable lens material or lens material precursor may be employed in forming the present contact lenses and lens bodies in accordance with the present invention. The final contact lens and lens body may be rigid, rigid gas permeable, soft, and/or hydrophilic. Preferably, the contact lens or lens body, for example, hydrated for use, is soft and in the form of a hydrogel and/or a high oxygen permeability, that is a high Dk, material. One particularly useful class of lens materials are hydrophilic silicone-containing materials. Such hydrophilic silicone-containing materials are high Dk materials and may have a number of the advantageous properties of both silicone polymeric materials, for example, crosslinked silicone polymeric materials, and hydrogel-forming polymeric materials. Contact lenses made of hydrophilic silicone-containing materials often have a relatively high modulus and are very advantageous, for example, provide reduced risk of eye irritation, when structured to include a rounded peripheral edge form or surface, in accordance with the present invention.

In the example shown in Fig. 1, one casting cup 20 generally defines a negative impression of the lens back or posterior surface (base curve) and one casting cup 30 generally defines a negative impression of the lens front or anterior surface.

In commercially available lenses, the point at which the two mold halves meet is usually chosen as the outer periphery of the finished lens. As shown in Fig. 1A, the mold cups 20, 30 meet at a point 50. This point 50 generally defines the molded lens edge. The edge of a fully molded lens conventionally represents the split line 60 between the male and female casting cups 20, 30.

Another example of such a conventional arrangement is shown in Fig. 1B, with back surface mold section 70 and front mold section 80 forming cavity 90, and point 100 defining the lens periphery.

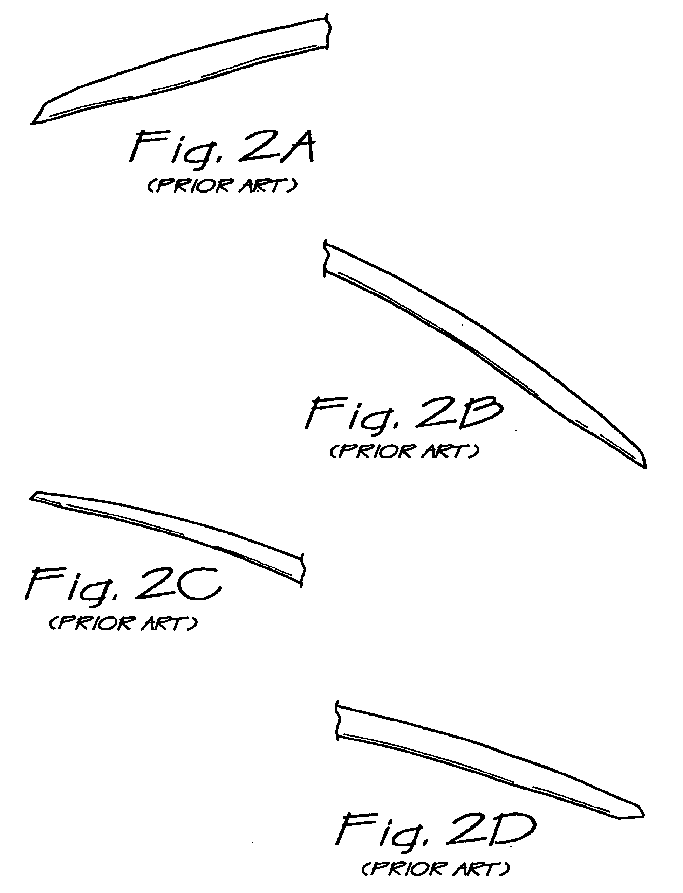

It can therefore be seen that conventional molding techniques produce a lens with a lens edge form which is "chiselled", or "pointed". Typical lens profiles formed by conventional cast molding techniques are shown in Figs. 2A, 2B, 2C and 2D.

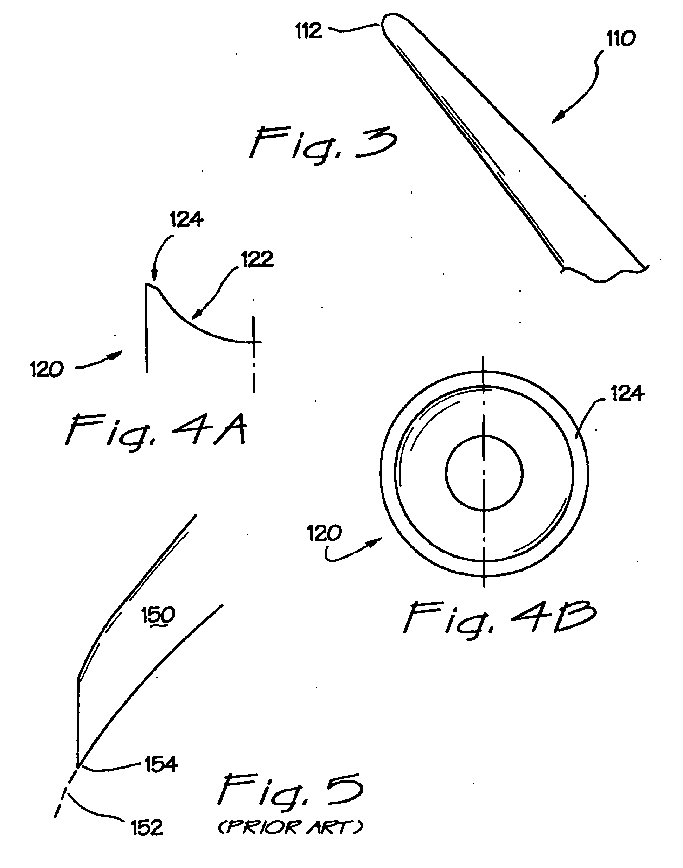

In contrast, as will now be described, the methods of the present invention produce a substantially smooth, rounded edge profile. A contact lens 110 formed by a method in accordance with the present invention is shown in Fig. 3.

Importantly, the illustrated lens 110 is produced in the fully molded state, without post molding steps designed to alter the shape or configuration of the peripheral edge. -As-shown, the lens 110 produced by a method in accordance with the present invention has a rounded, smooth edge 112.

Although the lens 110 may have seen some of the processing steps conventionally associated with a lens of this type, for example, demolding, hydration, inspection, packaging and sterilization, the lens 110 edge profile has not been substantially altered from its original, molded shape.

The illustrated lens 110 is produced by modification to insert tooling which is conventionally used to create the casting cups (i.e. mold halves) that are used to cast mold the lens.

As is well known in the art, prior to the cast molding of the contact lens, each of the mold sections (such as back surface mold 20 and front surface mold 30 in Fig. 1), is formed by injection molding a resin in the cavity of an injection molding apparatus. Mounted in the injection molding apparatus are "tools" (hereinafter sometimes referred to as "tooling inserts") for forming the optical surface impressions on the mold sections. Whereas the mold sections are typically used only once for casting an individual lens, the injection molding tools are used to make hundreds of mold sections (i.e. mold halves).

The tools used to make the mold sections are manufactured to extremely high specifications. No roughness or other surface defects are acceptable on a tool as such defects would be transferred to all of the mold sections made therefrom. Any such defect on the mold section surface would be transferred to the molded contact lens. The tools are typically made from brass, stainless steel, nickel or some combination thereof.

Turning now to Figs. 4A and 4B, a conventionally manufactured tool 120 is shown.

Typically, for making the back surface mold (such as mold half 20 shown in Figure 1A), the tool 120 includes at least one base curve (represented by line 122), to provide fit and/or refractive correction, the correction being, for example, spherical, torodial, multifocal, bifocal, etc. In addition, the tool 120 includes a feature 124 which forms part of the lens edge geometry. Feature 124 is sometimes tapered. The edge tapering on the back surface tool is conventionally flat or concave, in order to achieve a taper on the edge of the molded lens.

In other conventional tools (not shown) the edge feature 124 is omitted from the tool and the base curve is run out to the lens periphery. For example, the back surface tool may have no defined edge feature other than the base curve itself. In this case, edge tapering of the molded lens is usually accomplished by the surface profile of the front surface mold tool which includes a tapered edge feature.

Fig. 5 shows a cross sectional view of a lens 150 produced in this manner, i.e. in which base curve (represented in part by phantom line 152) is run out to the lens periphery 154 and no edge feature has been provided on the back surface tool (not shown). As can be seen, the lens edge geometry that this technique yields is also pointed, such as the lenses shown in Figs. 2A-2D.

It will be appreciated by those skilled in the art that at sufficiently high magnification, the sharp, angular corners of the lenses shown in Figs 2A-2D and Fig. 5 may well be slightly curved or radiused, due to shrinking in the mold for example, and therefore the molded lenses may not precisely duplicate the tooling insert geometry. However, the edge profile of the fully molded lenses shown are sharp and angular, and moreover, do not represent a more desirable, rounded profile that have been only conventionally available only in machined lenses or cast molded lenses which have undergone post processing polishing to alter, e.g., round, the peripheral edge of the lens.

As is described elsewhere herein, a method for cast molding a contact lens in accordance with the present invention generally comprises the steps of providing a back surface tool having a surface corresponding to a desired contact lens surface and at least one convex curve along an outer radius thereof, positioning the tool in a molding apparatus, for example, a conventional injection molding apparatus, introducing a moldable material into the molding apparatus and subjecting the material to conditions, for example, chosen from conditions conventionally used, effective to form a first mold section having a negative impression of the surface of the tool, assembling the first mold section with a second mold section to form a lens shaped cavity therebetween, and forming a contact lens member having a rounded edge form in the lens shaped cavity of the assembled mold sections. Upon demolding, the contact lens member itself is the contact lens product, or can be subjected to hydration to provide the contact lens product.

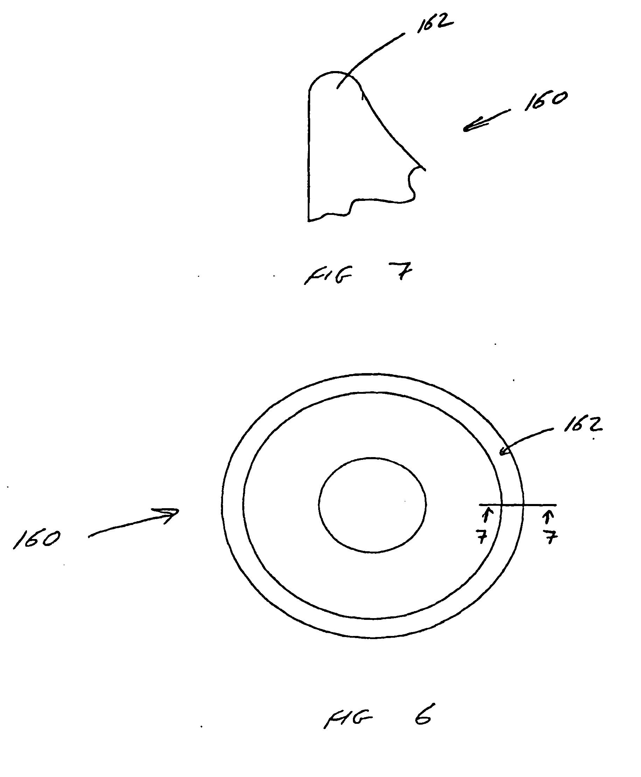

More particularly, referring now to Figs. 6-8, in contrast to the conventionally cast molded lenses, the present invention purposefully places at least one convex radius, or curve, at the outer or peripheral edge of a back surface tooling insert. This convex radius can be generated by a series of flats, for example, very short flats which together closely simulate continuously curved convex shaping, or by a combination of flats and convex curves, on the tooling insert.

Referring now specifically to Figs. 6 and 7, in one embodiment of the present invention, a tooling insert 160 is provided. The tooling insert 160 having such convex shaping as generally described hereinabove. For the lens 110 manufactured in accordance with the present invention and shown in Fig. 3, the tool 160 used in the manufacture of the lens 110 includes a convex curve along its outer radius, or peripheral edge surface 162.

Unlike prior tooling inserts that have been used in the manufacture of conventionally cast molded lenses, the present invention provides a method for manufacturing a contact lens having a cast molded, convex curved radius at the lens edge periphery.

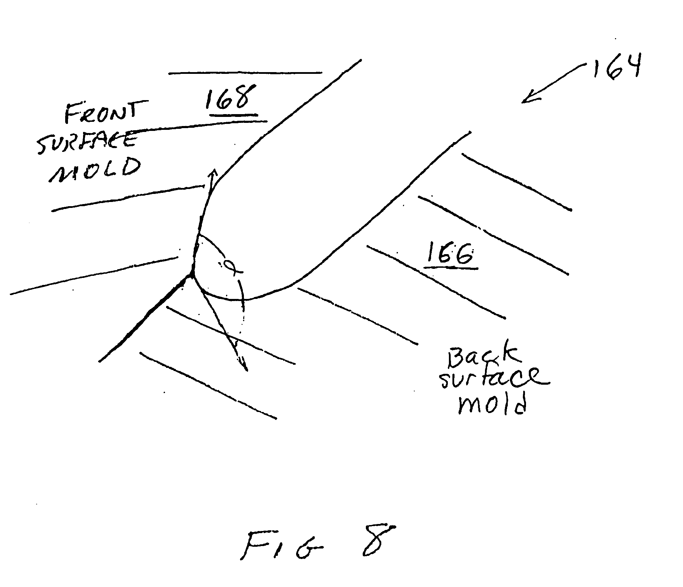

Referring now as well to Fig 8, a portion of an assembled casting cup pair 164 for fully cast molding a rounded edge contact lens in accordance with the present invention is shown. The cup pair 164 comprises a first, back surface mold half 166 assembled with a second, front surface mold half 168. The convex outer radius of the tool 160 used to make the back surface mold half 166 may be about 0.05 mm radius or larger.

When the mold halves 166, 168 are assembled together, the final fully cast molded lens, such as lens 110, has a substantially smooth, rounded edge as shown. Using a convex curve on the portion of the back surface tool 160 that creates the lens periphery can be used to yield a lens with a much more rounded shape, such as seen in the lens 110 of Fig. 3.

Preferably, when the two mold halves 166, 168 are assembled, the angle of intersection (represented by symbol α in Fig. 8) of the molds 166, 168, on the lens side, is greater than about 100 degrees. In the case of the lens 110 shown in Fig. 3 the angle of intersection of the two mold halves, on the lens side, is 140 degrees on the unprocessed or unhydrated lens member, in the dry state, producing a final or hydrated contact lens 110 with a much more rounded or less clearly defined edge surface. It is to be appreciated that the angle of intersection of the two mold halves on the lens side could be made less than or greater than about 140 degrees, for example, angles greater than 100 degrees could be used, for example, in the range of about 100 degrees to about 170 degrees or more.

After assembling the mold halves 166, 168, the rounded edged contact lens can be cast molded using conventional steps as known to those skilled in the art and described hereinabove. Although it is appreciated that processing steps performed after the cast molding, for example hydration, in the case of a hydrogel hydrophilic lenses, may to some extent change the finished lens manufactured in accordance with the present invention, the peripheral edge form of the finished lens remains substantially unaltered and much smoother than the conventional 'chiseled' edge previously seen.

By implementation of the present invention, a fully cast molded lens can be created with the desired (rounded) edge, without the need for dedicated post formation polishing and machining steps to create the desired peripheral edge form.

Although there has been hereinabove described specific methods of manufacturing a rounded edge contact lens having a rounded peripheral edge surface or form, in accordance with the present invention, for the purpose of illustrating the manner in which the invention may be used to advantage, it should be appreciated that the invention is not limited thereto. Accordingly, any and all modifications, variations, or equivalent arrangements which may occur to those skilled in the art, should be considered to be within the scope of the present invention as defined in the appended claims.

## Claims

1. A tool (160) useful in making a mold section for cast molding a contact lens, **characterized in that** the tool comprises:
an insert (160) adapted to be placed in a molding apparatus in forming a first mold section having a negative impression of a surface of the insert, the surface of the insert including a first surface portion in the general shape of a posterior face of a contact lens and a second surface portion (162) defining a convex continuously curved outer peripheral edge surface of the insert.

2. The tool (160) of claim 1 wherein the convex curved outer peripheral edge surface (162) of the insert (160) has a radius of at least about 0.05 mm.

3. The tool (160) of claim 1 or claim 2 wherein the convex curved outer peripheral edge surface (162) of the insert (160) is created by a series of flats approximating a convex curve or by a combination of flats and convex curves.

4. A method for producing a contact lens product **characterized in that,** the method comprises:
providing a back surface tool (160) including a first surface portion generally corresponding to a desired contact lens posterior face and a convexly continuously curved second surface portion (162) circumscribing the first surface portion;
positioning the back surface tool (160) in a molding apparatus;
introducing a polymeric moldable material into the molding apparatus and subjecting the moldable material to conditions effective to form a first polymeric mold section (166) having a negative impression of the first and second surface portions of the back surface tool (160);
assembling the first polymeric mold section (166) with a second mold section (168) to form a lens shaped cavity therebetween; and
forming a contact lens member in the lens shaped cavity of the assembled mold sections (166, 168);
removing the contact lens member from the mold sections; and optionally, performing one or more further processing steps, for example, hydrating or further hydrating the contact lens member, to form the final contact lens product.

5. The method of claim 4 wherein the contact lens member formed has a rounded edge.

6. The method of claim 4 or claim 5 wherein the forming step comprises polymerizing a hydrogel-forming composition in the lens shaped cavity.

7. The method of claim 6 which further comprises demolding the contact lens member and hydrating the contact lens member to form a hydrogel contact lens (110) having a rounded edge (112).

8. The method of any of claims 4 to 7 wherein the lens shaped cavity defines a junction angle on a lens side between the assembled mold sections (166, 168), the junction angle being at least about 100 degrees.

9. The method of any of claims 4 to 7 wherein the lens shaped cavity defines a junction angle on a lens side between the assembled mold sections (166, 168), the junction angle being in the range of about 100 degrees to about 170 degrees.

10. The method of any of claims 4 to 9 wherein the step of assembling comprises assembling the first polymeric mold section (166) with a second polymeric mold section (168) to form a lens shaped cavity there between.

11. The method of any of claims 4 to 10 wherein the convex curve along the outer radius of the surface is at least about 0.05 mm in radius.

12. The method of any of claims 4 to 11 wherein the contact lens member formed comprises a hydrophilic silicone-containing material.

## Patentansprüche

1. Werkzeug (160), das bei einer Herstellung eines Formteils zum Formgießen einer Kontaktlinse verwendbar ist, **dadurch gekennzeichnet, dass** das Werkzeug umfasst:
einen Einsatz (160), der angepasst ist, um in eine Formvorrichtung beim Formen eines ersten Formteils, das einen Negativabdruck einer Oberfläche des Einsatzes aufweist, angeordnet zu werden" wobei die Oberfläche des Einsatzes einen ersten Oberflächenteil in der allgemeinen Form einer hinteren Fläche einer Kontaktlinse und einen zweiten Oberflächenteil (162), der eine konvexe kontinuierlich gekrümmte äußere periphere Randoberfläche des Einsatzes begrenzt, umfasst.

2. Werkzeug (160) nach Anspruch 1, bei dem die konvexe gekrümmte äußere periphere Randoberfläche (162) des Einsatzes (160) einen Radius von mindestens etwa 0,05 mm aufweist.

3. Werkzeug (160) nach Anspruch 1 oder Anspruch 2, bei dem die konvexe gekrümmte äußere periphere Randoberfläche (162) des Einsatzes (160) durch eine Reihe von Abflachungen, die eine konvexe Kurve annähern, oder durch eine Kombination von Abflachungen und konvexen Kurven erzeugt ist.

4. Verfahren zur Erzeugung eines Kontaktlinsenprodukts, **dadurch gekennzeichnet, dass** das Verfahren umfasst:
Bereitstellen eines Rückflächenwerkzeugs (160), das einen ersten Oberflächenteil, der allgemein einer gewünschten hinteren Konntaktlinsenfläche entspricht, und einen konvex kontinuierlich gekrümmten zweiten Oberflächenteil (162), der den ersten Oberflächenteil umgrenzt, umfasst;
Positionieren des Rückflächenwerkzeugs (160) in einer Formvorrichtung;
Einführen eines polymeren formbaren Materials in die Formvorrichtung und Aussetzen des formbaren Materials Bedingungen, die wirkungsvoll sind, um ein erstes polymeres Formteil (166) zu bilden, das einen Negativabdruck des ersten und zweiten Oberflächenteils des Rückflächenwerkzeugs (160) aufweist;
Zusammenbauen des ersten polymeren Formteils (166) mit einem zweiten Formteil (168), um einen linsenförmigen Hohlraum dazwischen zu bilden; und
Bilden eines Kontaktlinsenelements in dem linsenförmigen Hohlraum der zusammengebauten Formteile (166, 168);
Entfernen des Kontaktlinsenelements aus den Formteilen; und fakultatives Ausführen eines oder mehrerer Weiterverarbeitungsschritte: z.B. Hydratisieren oder Nachhydratisieren des Kontaktlinsenelements, um das Kontaktlinsenendprodukt zu bilden.

5. Verfahren nach Anspruch 4, bei dem das Kontaktlinsenelement, das gebildet wird, einen gerundeten Rand aufweist.

6. Verfahren nach Anspruch 4 oder Anspruch 5, bei dem der Bildungsschritt umfasst: Polymerisieren einer Hydrogel-bildenden Zusammensetzung in dem linsenförmigen Hohlraum.

7. Verfahren nach Anspruch 6, das weiter umfasst: Entfernen des Kontaktlinsenelements aus der Form und Hydratisieren des Kontaktlinsenelements, um eine Hydrogel-Kontaktlinse (110) mit einem gerundeten Rand (112) zu bilden.

8. Verfahren nach einem der Ansprüche 4 bis 7, bei dem der linsenförmige Hohlraum einen Verbindungswinkel auf einer Linsenseite zwischen den zusammengebauten Formteilen (166, 168) begrenzt, wobei der Verbindungswinkel mindestens etwa 100 Grad beträgt.

9. Verfahren nach einem der Ansprüche 4 bis 7, bei dem der linsenförmige Hohlraum einen Verbindungswinkel auf einer Linsenseite zwischen den zusammengebauten Formteilen (166, 168) begrenzt, wobei der Verbindungswinkel im Bereich von etwa 100 Grad bis etwa 170 Grad liegt.

10. Verfahren nach einem der Ansprüche 4 bis 9, bei dem der Schritt eines Zusammenbaus umfasst: Zusammenbauen des ersten polymeren Formteils (166) mit einem zweiten polymeren Formteil (168), um einen linsenförmigen Hohlraum dazwischen zu bilden.

11. Verfahren nach einem der Ansprüche 4 bis 10, bei dem die konvexe Kurve entlang dem äußeren Radius der Oberfläche mindestens etwa 0,05 mm im Radius ist.

12. Verfahren nach einem der Ansprüche 4 bis 11, bei dem das Kontaktlinsenelement, das geformt wird, ein hydrophiles siliconhaltiges Material umfasst.

## Revendications

1. Outil (160) utile dans la fabrication d'une section de moule servant à mouler par coulée une lentille de contact, **caractérisé en ce que** l'outil comprend :
un insert (160) adapté pour être placé dans un appareil de moulage lors de la formation d'une première section de moule ayant une impression négative d'une surface de l'insert, la surface de l'insert incluant une première partie de surface ayant la forme générale d'une face postérieure d'une lentille de contact et une seconde partie de surface (162) définissant une surface convexe de bord périphérique externe continuellement arrondi de l'insert.

2. Outil (160) selon la revendication 1, dans lequel la surface convexe de bord périphérique externe arrondi (162) de l'insert (160) a un rayon d'au moins environ 0,05 mm.

3. Outil (160) selon la revendication 1 ou la revendication 2, dans lequel la surface convexe de bord périphérique externe arrondi (162) de l'insert (160) est créée par une série de surfaces planes approchant une courbe convexe ou par une combinaison de surfaces planes et de courbes convexes.

4. Procédé de fabrication d'un produit de lentille de contact **caractérisé en ce que** le procédé comprend les étapes consistant à :
◆ prévoir un outil de surface arrière (160) incluant une première partie de surface qui correspond généralement à une face postérieure de lentille de contact souhaitée, et une seconde partie de surface convexe continuellement arrondie (162) circonscrivant la première partie de surface ;
◆ positionner l'outil de surface arrière (160) dans un appareil de moulage ;
◆ introduire un matériau polymère moulable dans l'appareil de moulage et soumettre le matériau moulable à des conditions efficaces pour former une première section de moule polymère (166) ayant une impression négative des première et seconde parties de surface de l'outil de surface arrière (160) ;
◆ assembler la première section de moule polymère (166) avec une seconde section de moule (168) pour former une cavité en forme de lentille entre elles ; et
◆ former un élément de lentille de contact dans la cavité en forme de lentille des sections de moule assemblées (166, 168) ;
◆ enlever l'élément de lentille de contact des sections de moule ; et, facultativement, effectuer une ou plusieurs autres étapes de traitement, par exemple, hydrater ou davantage hydrater l'élément de lentille de contact, pour former le produit final de lentille de contact.

5. Procédé selon la revendication 4, dans lequel l'élément de lentille de contact formé a un bord arrondi.

6. Procédé selon la revendication 4 ou la revendication 5, dans lequel l'étape de formage comprend la polymérisation d'une composition servant à former un hydrogel dans la cavité en forme de lentille.

7. Procédé selon la revendication 6, qui comprend en outre le démoulage de l'élément de lentille de contact et l'hydratation de l'élément de lentille de contact pour former une lentille de contact hydrogel (110) ayant un bord arrondi (112).

8. Procédé selon l'une quelconque des revendications 4 à 7, dans lequel la cavité en forme de lentille définit un angle de jonction sur un côté de la lentille entre les sections de moule assemblées (166, 168), l'angle de jonction faisant au moins environ 100 degrés.

9. Procédé selon l'une quelconque des revendications 4 à 7, dans lequel la cavité en forme de lentille définit un angle de jonction sur un côté de la lentille entre les sections de moule assemblées (166, 168), l'angle de jonction étant dans la plage allant d'environ 100 degrés à environ 170 degrés.

10. Procédé selon l'une quelconque des revendications 4 à 9, dans lequel l'étape d'assemblage comprend l'assemblage de la première section de moule polymère (166) avec une seconde section de moule polymère (168) pour former une cavité en forme de lentille entre elles.

11. Procédé selon l'une quelconque des revendications 4 à 10, dans lequel la courbe convexe le long du rayon externe de la surface a un rayon d'au moins environ 0,05 mm.

12. Procédé selon l'une quelconque des revendications 4 à 11, dans lequel l'élément de lentille de contact formé comprend un matériau contenant du silicone hydrophile.
